# EUROPÄISCHE PATENTSCHRIFT

(11) **EP 1 072 850 B1**
(45) Veröffentlichungstag und Bekanntmachung des Hinweises auf die Patenterteilung: **12.10.2005**
(21) Anmeldenummer: 00114827.9
(22) Anmeldetag: 11.07.2000
(51) Int. Cl.: F25B 1/00, F25B 7/00, F25B 49/02, F25D 17/02

(54) **Kälteanlage**
Refrigeration plant
Installation frigorifique

(30) Priorität: 30.07.1999 DE 19935550
(43) Veröffentlichungstag der Anmeldung: 31.01.2001
(73) Patentinhaber: Epta Deutschland GmbH, 68167 Mannheim (DE)
(72) Erfinder: Tillner-Roth,H. Reiner Dr.Ing., 69469 Weinheim-Sulzbach (DE)
(74) Vertreter: Naumann, Ulrich

(56) Entgegenhaltungen:
- EP-A- 0 340 115
- WO-A-82/02588
- DE-A- 2 112 362
- DE-A- 2 620 133
- US-A- 4 680 939
- US-A- 5 792 382

## Beschreibung

Die vorliegende Erfindung betrifft eine Kälteanlage nach dem Oberbegriff des Patentanspruchs 1.

Kälteanlagen der gattungsbildenden Art - es handelt sich hier um Kälteanlagen mit indirektem Kühlsystem - sind seit langem aus der Praxis bekannt. Beispielhaft wird dazu auf die DE 43 44 484 A1, US 5,743,102 und EP 0 340 115 verwiesen. Die aus der DE 43 44 484 A1 bekannte Kälteanlage umfasst einen Primärkreislauf und einen Sekundärkreislauf. Der Primärkreislauf besteht aus den Komponenten Verdichter, Verflüssiger, Drosselstelle und Verdampfer-Kondensator. Der Sekundärkreislauf umfasst den Verdampfer-Kondensator, eine Kältemittelpumpe und einen Wärmetauscher in einem Kühlmöbel. Im Konkreten handelt es sich bei der bekannten Kälteanlage um eine Anlage zur Erzeugung von Gewerbekälte, nämlich zur Versorgung der Lebensmittelkühlung einer Kaufhalle mit gekühltem Kältemittel. Für den Primärkreislauf ist dort Ammoniak und für den zweiten Kreislauf das Kältemittel R134a vorgesehen.

Die bekannten Kälteanlagen sind jedoch in der Praxis problematisch, wird nämlich aufgrund der dort verwendeten Kältemittel längst nicht energieoptimal betrieben, insbesondere dann nicht, wenn die als Kaltsole und gegebenenfalls Warmsole bezeichneten, zwischen dem Primärkreislauf und der Kühlstelle sowie gegebenenfalls zwischen dem Primärkreislauf und dem Rückkühler zirkulierenden Wärmeträger einen sogenannten Temperaturglide aufweisen, an den das Kältemittel des Primärkreislaufs nicht angepasst ist. Insoweit ist nämlich zur Wärmeabgabe des Kältemittels des Primärkreislaufs und zur Wärmeaufnahme des Kältemittels des Primärkreislaufs aufgrund der durchschnittlich grösseren erforderlichen Temperaturdifferenz mehr Energie zum Betrieb des Primärkreislaufs erforderlich, so dass von einem energieoptimalen Betrieb nicht die Rede sein kann.

Der vorliegenden Erfindung liegt daher die Aufgabe zugrunde, eine Kälteanlage der gattungsbildenden Art derart auszugestalten und weiterzubilden, dass ein energieoptimierter Betrieb der Kälteanlage möglich ist.

Die voranstehende Aufgabe wird durch die Merkmale des Patentanspruches 1 gelöst.

Im Konkreten könnte das Kältemittel des Primärkreislaufs ein Stoffgemisch mit durch die Gemischzusammensetzung definierbarem und auf die jeweilige Sole abstimmbarem Temperaturglide sein. Des weiteren könnte das Kältemittel des Primärkreislaufs auf den Massestrom des Sekundärkreislaufs bzw. der umlaufenden Sole abstimmbar sein. In beiden Fällen findet eine unabhängige Abstimmung auf das Betriebsverhalten des Sekundärkreislaufs statt.

Erfindungsgemäss ist erkannt worden, dass sich die Kälteanlage bzw. der Betrieb der Kälteanlage in euergetischer Hinsicht dadurch optimieren lässt, dass man versucht, das Kältemittel des Primärkreislaufs dem Temperaturglide der Sole anzupassen, wobei es sich dabei meist um eine Salzlösung handelt. Eine solche Anpassung findet in erfindungsgemässer Weise dadurch statt, dass man ein Kältemittel für den Primärkreislauf auswählt, welches ebenfalls einen Temperaturglide aufweist. In weiter erfindungsgemässer Weise ist erkannt worden, dass insbesondere Stoffgemische einen solchen Temperaturglide aufweisen, wobei sich der dortige Temperaturglide durch die Gemischzusammensetzung definieren und dabei auf die jeweilige Sole abstimmen lässt. Durch geeignete Wahl des Kältemittels des Primärkreislaufs ist es somit möglich, eine optimale Anpassung an den Temperaturglide der Sole vorzunehmen, wobei sich dadurch der Energiebedarf des Systems reduzieren und gewissermassen optimieren lässt.

Zum besseren Verständnis der hier konkret beanspruchten Lehre sei nachfolgend das Phänomen des genutzten Temperaturglides kurz erläutert. Dazu folgendes:

Während reine Stoffe bei der isobaren Kondensation bzw. Verdampfung (P = konstant) den Phasenwechsel bei konstanter Temperatur vollziehen, ändert sich bei Gemischen die Temperatur beim Übergang vom flüssigen in den gasförmigen Aggregatzustand oder umgekehrt. Diese Temperaturänderung wird als Temperaturglide bezeichnet. Der Temperaturglide hängt von mehreren Faktoren ab.

Je weiter die Siedetemperaturen der reinen Komponenten des Gemischs auseinander liegen, desto grösser ist üblicherweise der sich bei einem Gemisch aus diesen Komponenten ergebende Temperaturglide. An den Konzentrationsrändem des Gemischs, d.h. nahe der reinen Komponenten bzw. Stoffe, läuft der Temperaturglide gegen Null. Demnach ändert sich der Temperaturglide mit der Zusammensetzung und hat in der Mitte des Konzentrationsspektrums des Gemischs meist den grössten Wert. Folglich lässt sich der Temperaturglide durch Variation der Zusammensetzung des Gemischs beliebig einstellen und beispielsweise auf den Temperaturglide der Sole abstimmen.

Bei Gemischen, deren reine Komponenten eng beieinander liegende Siedetemperaturen aufweisen, ist der Temperaturglide meist sehr gering. Darüberhinaus existieren auch Gemische, bei denen überhaupt kein Temperaturglide auftritt. Hierbei handelt es sich grundsätzlich um azeotrope Gemische, bei denen der Temperaturglide 0K beträgt. Demnach verhalten sich diese Gemische beim isobaren Verdampfen und Kondensieren genauso wie deren reine Komponenten bzw. wie reine Fluide, es findet nämlich keine Konzentrationsänderung in der Gas- und Flüssigphase und somit auch kein Temperaturglide statt. Wenngleich solche Gemische selten sind, werden sie in der Kältetechnik bislang gerne verwendet, da man mit diesen Gemischen innerhalb der Kälteanlage keine Konzentrationsverschiebung zu befürchten hat. Obendrein lassen sich diese Gemische sehr einfach modelltechnisch darstellen bzw. modellieren, wodurch man relativ einfach Prozessberechnungen vornehmen kann.

Seit einigen Jahren wird intensiv nach neuen azeotropen Kältemittelgemischen gesucht, die nämlich aus umweltverträglichen Komponenten bestehen. Der voranstehend erörterte, aus der Praxis bekannte Nachteil lässt sich mit diesen Kältemitteln jedoch nicht vermeiden.

Die Anforderungen an ein ideales Kältemittel sind äusserst vielfältig. Ganz besonders an dessen thermodynamische Eigenschaften werden hohen Anforderungen gestellt. Ausserdem soll es umweltverträglich und dabei billig sein. Neben einer hohen Leistungszahl wird auch eine hohe volumetrische Kälteleistung in einem theoretischen Vergleichsprozess gefordert. Insbesondere vor dem Hintergrund der ozonzerstörenden Eigenschaften früherer Kältemittel wie R12 und R22 werden insbesondere im Gewerbekältebereich Gemische aus den reinen Stoffen R32, R125, R143a und R134a als Arbeitsfluide verwendet, die den hohen Anforderungen weitestgehend entsprechen. Neben diesen fluorierten Kohlenwasserstoffe (HFKW) gibt es auch natürliche Kältemittel, wie Propan, Butan oder Gemische aus diesen beiden Komponenten und schliesslich auch CO₂ sowie Ammoniak.

Letztendlich lassen sich zur Anwendung in der Gewerbekälte nur eine begrenzte Anzahl von Kältemitteln anwenden, die nämlich weitestgehend den Anforderungen genügen. In erfindungsgemässer Weise handelt es sich bei dem Kältemittel des Primärkreislaufs um ein Stoffgemisch, mit durch die Gemischzusammensetzung definierbarem und auf die jeweilige Sole abstimmbarem Temperaturglide.

In vorteilhafter Weise weist das Gemisch ein Temperaturglide von mindestens 1K auf. Gemische mit einem Temperaturglide im Bereich zwischen 3K und 8K eignen sich ganz besonders.

Übliche, nicht azeotrope Kältemittelgemische, die einen Temperaturglide von mehr als 1K aufweisen, sind beispielsweise R404A, R407C oder R407E. Im Hinblick auf die indirekte Kühlung, bei der ein bestimmter Temperaturglide zur Erwärmung bzw. Abkühlung des Kälteträgers bzw. der Sole erforderlich ist, eignen sich insbesondere Kältemittel des Typs R407, bei dem es sich um ein ternäres Gemisch aus R32, R125 und R134a handelt. Entsprechend dem hier realisierten Temperaturglide - bedingt durch die Anforderungen des Kälteträgers - ist es möglich, aus dem voranstehend genannten System eine Zusammensetzung bzw. einen Zusammensetzungsbereich auszuwählen, der sich möglichst eng mit dem Temperaturglide der Wärmeüberträger deckt. Das zuvor genannte ternäre Gemisch eignet sich sehr gut als Kältemittel, da es für weite Bereiche Temperaturglides von bis zu 7K aufweist, wodurch eine Optimierung der Zusammensetzung bezüglich der Temperaturdifferenz in idealer Weise möglich ist, zumal auch hinreichend genaue Stoffmodelle für dieses Gemisch zur Auswahl der jeweiligen Komponenten vorliegen.

An dieser Stelle sei ganz besonders hervorgehoben, dass nach der hier konkret beanspruchten Lehre ein energieoptimierter Betrieb einer Kälteanlage mit indirektem Kühlsystem möglich ist, nämlich dadurch, dass der Temperaturglide des Kältemittels auf den durch die Sole geforderten Temperaturglide abgestimmt ist, und zwar durch Optimierung der Gemischzusammensetzung, wobei es sich um irgendein geeignetes Gemisch, gleichgültig aus wie vielen Komponenten bestehend, handeln kann. Dadurch ist eine Trennung der Optimierung des Primärkreislaufs von der Optimierung des Sekundärkreislaufs möglich, wobei die Optimierungsprozesse unabhängig voneinander und nicht wie bislang zwangsweise miteinander gekoppelt und dabei gleichzeitig durchführbar sind.

Des weiteren sollte das Kältemittel technisch stabil und nicht brennbar sein. Im Hinblick auf den Einsatz eines Kompressors ist es des weiteren erforderlich, dass das Kältemittel mit Öl mischbar ist. Ausserdem sollte das Kältemittel einen niedrigen Gefrierpunkt aufweisen, wodurch sich der Einsatz in einer gattungsgemässen Kälteanlagen besonders eignet. Zunehmend wird eine Umweltverträglichkeit jedweder Stoffe gefordert, so auch der Komponenten des Kältemittels.

Des weiteren ist es von Vorteil, wenn im System eine Druckanpassung möglich ist. Dazu könnte eine drehzahlgeregelte Pumpe zum Fördern des Kältemittel dienen.

Hinsichtlich der beanspruchten Lehre ist es von weiterem Vorteil, wenn die den Wärmetausch zwischen Primärkreislauf und Sole bewerkstelligenden Wärmetauscher im Gegenstrom arbeiten. Im Rahmen einer solchen Ausgestaltung lässt sich die Anpassung der Temperaturglides ganz besonders vorteilhaft nutzen.

Schliesslich könnten zwei oder mehrere Primärkreisläufe kaskadiert sein, um nämlich Kühlstellen mit unterschiedlichen Kältestufen zu realisieren. Dazu ist in vorteilhafter Weise mindestens ein weiterer Primärkreislauf vorgesehen, wobei die Kaltsole des ersten Primärkreislaufs als Warmsole des zweiten Primärkreislaufs dient und wobei eine Kaltsole des zweiten Primärkreislaufs zwischen dem zweiten Primärkreislauf und mindestens einer weiteren Kühlstelle zirkuliert. Durch diese Massnahmen lassen sich Kühlstellen mit unterschiedlichen Kältestufen realisieren, nämlich beispielsweise mit einer der Innentemperatur eines üblichen Kühlschranks entsprechenden Kühltemperatur und einer der üblichen Temperatur eines Gefrierfachs entsprechende Tiefkühltemperatur.

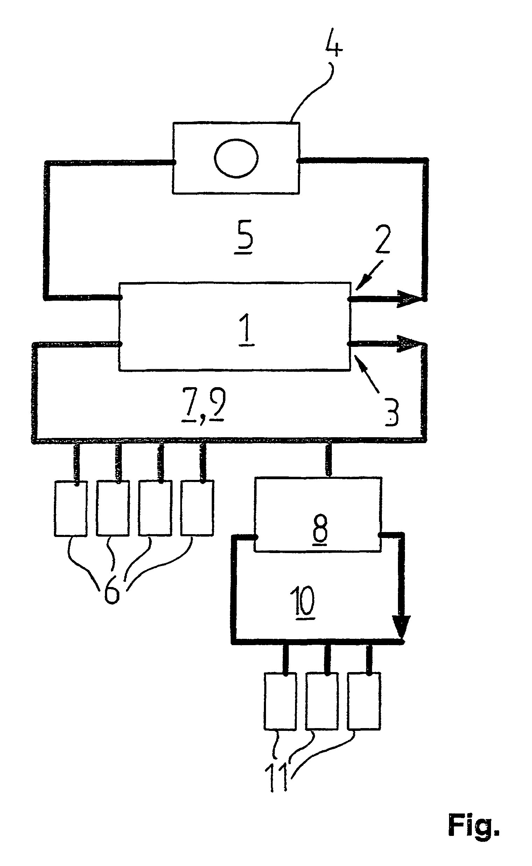

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im allgemeinen bevorzugte Ausgestaltungen und Weiterbildungen der Lehre erläutert. In der Zeichnung zeigt
die einzige Figur ein Ausführungsbeispiel einer erfindungsgemässen Kälteanlage mit indirektem Kühlsystem, wobei dort zwei Primärkreisläufe zur Realisierung unterschiedlicher Kältestufen kaskadiert sind.

Die einzige Figur zeigt schematisch eine Kälteanlage mit indirektem Kühlsystem, bestehend aus einem Primärkreislauf 1 für normale Kälte, wobei dieser Primärkreislauf 1 einen in der Figur nicht gezeigten Verdichter, einen Verflüssiger und einen Verdampfer umfasst. Innerhalb des Primärkreislaufs zirkuliert Kältemittel.

Dem Primärkreislauf 1 wird hochdruckseitig 2 über einen Wärmetauscher Wärme entzogen. Niederdruckseitig wird dem Primärkreislauf 1 ebenfalls über einen Wärmetauscher Wärme zugeführt, wobei zwischen dem ersten Wärmetauscher und einem Rückkühler 4 eine als Wärmeträger dienende Warmsole 5 zirkuliert. Zwischen dem zweiten Wärmetauscher und verschiedenen Kühlstellen 6 zirkuliert eine als Kälteträger dienende Kaltsole 7. Bei den Kühlstellen 6 handelt es sich um Kühlstellen 6 mit normaler Kälte.

Erfindungsgemäss handelt es sich bei dem Kältemittel des Primärkreislaufs 1 um ein Stoffgemisch mit durch die Gemischzusammensetzung definierbarem und auf die jeweilige Sole 5, 7 abstimmbarem Temperaturglide.

Bei dem in der einzigen Figur gezeigten Ausführungsbeispiel ist ein kaskadierter zweiter Primärkreislauf 8 vorgesehen, der zur weiteren Kühlung dient, nämlich auf eine tiefere Kälte. Im Konkreten dient die Kaltsole 7 des ersten Primärkreislaufs 1 als Warmsole 9 des zweiten Primärkreislaufs 8, wobei eine Kaltsole 10 des zweiten Primärkreislaufs 8 zwischen dem zweiten Primärkreislauf 8 und weiteren Kühlstellen 11 zirkuliert. Bei den Kühlstellen 11 handelt es sich um Kühlstellen, die mit tiefer Kälte versorgt werden.

Abschliessend sei ganz besonders darauf hingewiesen, dass das voranstehend erörterte Ausführungsbeispiel der beispielhaften Erörterung der beanspruchten Lehre dient, diese jedoch nicht auf das Ausführungsbeispiel einschränkt.

## Patentansprüche

1. Kälteanlage mit indirektem Kühlsystem, bestehend aus einem mindestens einen Verdichter, einen Verflüssiger und einen Verdampfer umfassenden Primärkreislauf (1) mit zirkulierendem Kältemittel, wobei dem Primärkreislauf (1) hochdruckseitig (2) über einen ersten Wärmetauscher Wärme entzogen und niederdruckseitig (3) über einen zweiten Wärmetauscher Wärme zugeführt wird, und wobei zwischen dem ersten Wärmetauscher und einem Rückkühler (4) eine als Wärmeträger dienende Warmsole (5) und zwischen dem zweiten Wärmetauscher und mindestens einer Kühlstelle (6) eine als Kälteträger dienende Kaltsole zirkuliert,
**dadurch gekennzeichnet, dass** das Kältemittel des Primärkreislaufs (1) ein Stoffgemisch mit einem auf das Betriebsverhalten des jeweiligen Kalt- und Warmsole abgestimmten Temperaturglide ist, wobei der Temperaturglide durch die Gemischzusammensetzung definiert ist, wobei das Kältemittel des Primärkreislaufs (1) auf den Massestrom des jeweiligen umlaufenden Kalt- und Warmsole bzw der umlaufenden Solen abgestimmt wird, und wobei in beiden Fällen eine unabhängige Abstimmung auf das Betriebsverhalten der jeweiligen Solen.

2. Kälteanlage nach Anspruch 1, **dadurch gekennzeichnet, dass** das Gemisch einen Temperaturglide von mindestens 1K aufweist, wobei das Gemisch einen Temperaturglide im Bereich zwischen 3 und 8 K aufweisen kann

3. Kälteanlage nach Anspruch 1 oder 2, **dadurch gekennzeichnet, dass** es sich bei dem Gemisch um ein binäres oder ternäres Gemisch mit vorzugsweise zwei Komponenten handelt, beispielsweise um ein Gemisch der Stoffe R32, R125, R134a und R143a.

4. Kälteanlage nach einem der Ansprüche 1 bis 3, **dadurch gekennzeichnet, dass** das Kältemittel chemisch stabil und/oder nicht brennbar und/oder umweltverträglich ist und vorzugsweise einen niedrigen Gefrierpunkt aufweist.

5. Kälteanlage nach einem der Ansprüche 1 bis 4, **dadurch gekennzeichnet, dass** zum Fördern des Kältemittels eine drehzahlgeregelte Pumpe dient.

6. Kälteanlage nach einem der Ansprüche 1 bis 5, **dadurch gekennzeichnet, dass** die Wärmetauscher im Gegenstrom arbeiten.

7. Kälteanlage nach einem der Ansprüche 1 bis 6, **dadurch gekennzeichnet, dass** mindestens ein weiterer Primärkreislauf (8) vorgesehen ist, wobei die Kaltsole (7) des ersten Primärkreislaufs (1) als Warmsole (9) des zweiten Primärkreislaufs (8) dient und wobei eine Kaltsole (10) des zweiten Primärkreislaufs (8) zwischen dem zweiten Primärkreislauf (8) und mindestens einer Kühlstelle (11) zirkuliert.

## Claims

1. Refrigeration plant having an indirect cooling system, comprising a primary circuit (1) that has circulating refrigerating medium and that comprises at least one compressor, one condenser and one evaporator, heat being removed from the primary circuit (1) on the high pressure side (2) *via* a first heat exchanger and heat being supplied on the low pressure side (3) *via* a second heat exchanger, and a hot brine (5) serving as heat transfer medium circulating between the first heat exchanger and a re-cooling apparatus (4) and a cold brine serving as cooling agent circulating between the second heat exchanger and at least one cooling station (6), **characterised in that** the refrigerating medium of the primary circuit (1) is a mixture of substances having a temperature glide adapted to the operating behaviour of the cold and hot brine in question, the temperature glide being determined by the composition of the mixture, the refrigerating medium of the primary circuit (1) being adapted to the mass flow rate of the circulating cold and hot brine in question or to the circulating brines, and independent adaptation to the operating behaviour of the brine in question taking place in both cases.

2. Refrigeration plant according to claim 1, **characterised in that** the mixture exhibits a temperature glide of at least 1 K, it being possible for the mixture to exhibit a temperature glide in the range from 3 to 8 K.

3. Refrigeration plant according to claim 1 or 2, **characterised in that** the mixture is a binary or ternary mixture having preferably two components, for example a mixture of the substances R32, R125, R134a and R143a.

4. Refrigeration plant according to any one of claims 1 to 3, **characterised in that** the refrigerating medium is chemically stable and/or non-combustible and/or environmentally compatible and preferably has a low freezing point.

5. Refrigeration plant according to any one of claims 1 to 4, **characterised in that** a speed-controlled pump serves to feed the refrigerating agent.

6. Refrigeration plant according to any one of claims 1 to 5, **characterised in that** the heat exchangers work counter-currently.

7. Refrigeration plant according to any one of claims 1 to 6, **characterised in that** at least one further primary circuit (8) is provided, the cold brine (7) of the first primary circuit (1) serving as hot brine (9) of the second primary circuit (8), and a cold brine (10) of the second primary circuit (8) circulating between the second primary circuit (8) and at least one cooling station (11).

## Revendications

1. Installation frigorifique avec système de refroidissement indirect, avec un circuit primaire (1) à fluide frigorigène circulant comprenant au moins un compresseur, un condenseur et un vaporiseur, de la chaleur étant soutirée du côté haute pression (2) du circuit primaire (1) par l'intermédiaire d'un premier échangeur de chaleur et de la chaleur étant amenée du côté basse pression (3) par l'intermédiaire d'un second échangeur de chaleur et une saumure chaude (5) servant de caloporteur circulant entre le premier échangeur de chaleur et un réfrigérant de retour (4) et une saumure froide servant de réfrigérant circulant entre le second échangeur de chaleur et au moins un emplacement de refroidissement (6),
**caractérisée par le fait que** le fluide frigorigène du circuit primaire (1) est un mélange de matières avec un glissement de température adapté à la tenue en service des saumures froide et chaude respectives, le glissement de température étant défini par la composition du mélange, le fluide frigorigène du circuit primaire (1) étant adapté au courant de masse de la saumure froide et chaude circulant respectivement ou respectivement des saumures circulant, et un accord indépendant sur la tenue en service de la saumure respective ayant lieu.

2. Installation frigorifique selon la revendication 1,
**caractérisée par le fait que** le mélange présente un glissement de température d'au moins 1 K, le mélange pouvant présenter un glissement de température dans la plage entre 3 et 8K.

3. Installation frigorifique selon la revendication 1 ou 2,
**caractérisée par le fait qu'**il s'agit pour le mélange d'un mélange binaire ou ternaire avec de préférence deux composants, par exemple d'un mélange des substances R32, R125, R134a et R143a.

4. Installation frigorifique selon l'une des revendications 1 à 3,
**caractérisée par le fait que** le fluide frigorigène est chimiquement stable et/ou non combustible et/ou compatible avec l'environnement et présente de préférence un point de congélation bas.

5. Installation frigorifique selon l'une des revendications 1 à 4,
**caractérisée par le fait qu'**une pompe réglée en vitesse de rotation est utilisée pour le transport du fluide frigorigène.

6. Installation frigorifique selon l'une des revendications 1 à 5,
**caractérisée par le fait que** les échangeurs de chaleur travaillent à contre-courant.

7. Installation frigorifique selon l'une des revendications 1 à 6,
**caractérisée par le fait qu'**au moins un autre circuit primaire (8) est prévu, la saumure froide (7) du premier circuit primaire (1) servant de saumure chaude (9) du second circuit primaire (8) et une saumure froide (10) du second circuit primaire (8) circulant entre le second circuit primaire (8) et au moins un emplacement de refroidissement (11).
